# EUROPÄISCHE PATENTSCHRIFT

(11) **EP 1 377 785 B1**
(45) Veröffentlichungstag und Bekanntmachung des Hinweises auf die Patenterteilung: **20.07.2005**
(21) Anmeldenummer: 02745217.6
(22) Anmeldetag: 05.04.2002
(51) Int. Cl.: F27D 15/02, F28C 3/16, B65G 25/00

(54) **KÜHLROST FÜR SCHÜTTGUT**
COOLING GRID FOR BULK MATERIAL
GRILLE REFRIGERANTE POUR MATERIAU EN VRAC

(30) Priorität: 06.04.2001 DE 10117226
(43) Veröffentlichungstag der Anmeldung: 07.01.2004
(73) Patentinhaber: Claudius Peters Technologies GmbH, 21614 Buxtehude (DE)
(72) Erfinder: MEYER, Hartmut, 21401 Thomasburg (DE); STAAK, Thomas, 22391 Hamburg (DE); BRUNET, Dominique, 21279 Hollenstedt (DE); MÖLLER, Ulrich, 25436 Moorrege (DE)
(74) Vertreter: Glawe, Delfs, Moll & Partner
(86) Internationale Anmeldenummer: PCT/EP2002/003804
(87) Internationale Veröffentlichungsnummer: WO 2002/081994

(56) Entgegenhaltungen:
- WO-A-98/48231
- PATENT ABSTRACTS OF JAPAN vol. 004, no. 080 (M-015), 10. Juni 1980 (1980-06-10) & JP 55 041310 A (BABCOCK HITACHI KK), 24. März 1980 (1980-03-24)
- PATENT ABSTRACTS OF JAPAN vol. 006, no. 068 (C-100), 30. April 1982 (1982-04-30) & JP 57 007226 A (BABCOCK HITACHI KK), 14. Januar 1982 (1982-01-14)

## Beschreibung

Die Erfindung betrifft einen Kühlrost für Schüttgut mit einer Tragplatte zur Aufnahme einer Schicht des Kühlguts und Förderorganen zum Transport des Kühlguts in einer Förderrichtung auf der ruhenden Tragplatte, die auf der mit Kühlgut beaufschlagten Seite der Tragplatte beweglich angeordnete Schieber und einen auf der anderen Seite der Tragplatte angeordneten Antrieb zum Ausführen einer Hubbewegung aufweist, wobei jedem Schieber eine Öffnung in der Tragplatte und ein dadurch geführter Übertrager zugeordnet ist, der den Schieber mit dem Antrieb verbindet.

Es sind Kühlroste bekannt, die als Schubrost aufgebaut sind, der aus einer Mehrzahl von quer zur Förderrichtung verlaufenden Reihen von Rostplatten besteht, die abwechselnd feststehend und in Förderrichtung hin- und herbeweglich angeordnet sind. Durch die Hin- und Herbewegung der beweglichen Rostplatten wird das Kühlgut in Förderrichtung transportiert. Aufgrund der beweglichen Anordnung einiger der Rostplatten ist deren Versorgung mit Kühlgas aufwendig. Außerdem unterliegen die beweglichen Rostplatten einem beträchtlichen Verschleiß. Ferner sind Kühlroste bekannt, bei denen das Gut auf einer still stehenden Tragplatte durch ein Fördersystem vorgeschoben wird. Das Fördersystem weist quer zur Förderrichtung verlaufende Schieber auf, die entweder fortlaufend in der Förderrichtung bewegt werden oder hin- und herbeweglich angetrieben sind. Die Erfindung bezieht sich auf die Bauform mit hin- und herbeweglichen Schiebern.

Aus der US-A-3,010,218 ist ein Kühlrost dieser Art bekannt, bei dem auf der Tragplatte, die das Kühlgut trägt, eine Reihe von Schiebern angeordnet ist, die keilartig geformt und entlang der Oberfläche der Tragplatte hin- und herbeweglich sind. Unterhalb der Schieber sind jeweils Öffnungen in der Tragplatte vorgesehen, durch die jeweils ein Bolzen geführt ist. Dieser ist mit seinem oberen Ende an dem Schieber und mit seinem unteren Ende an einem Antriebsrahmen angeordnet. Die Bolzen dienen dazu, die Hin- und Herbewegung des Antriebsrahmens auf die Schieber zu übertragen. Eine ähnlicher Kühlrost ist aus der US-A-2,904,323 bekannt. Nachteilig an diesen bekannten Kühlrosten ist, daß die Schieber eine nur unzureichende Förderwirkung haben und die Menge des durch die Öffnungen durchfallenden Kühlguts unerwünscht hoch ist.

Bei dem Kühlrost gemäß WO 98/48231 sind die Schieber hin- und herbeweglich angeordnet. Der Antriebsrahmen für die Schieber ist unterhalb der Tragplatte angeordnet. Um den Antriebsrahmen mit den Schiebern zu verbinden, sind zwei parallele, sich über die gesamte Länge der Tragplatte in Förderrichtung erstreckende Übertragungsplatten vorgesehen, die mit ihrem unteren Ende mit dem Antriebsrahmen verbunden sind und an deren oberen Ende die Schieber angeordnet sind. Damit die Übertragungsplatten von den Schiebern auf der Oberseite zu dem Antriebsrahmen auf der Unterseite der Tragplatte geführt sein können, sind entsprechende in Förderrichtung verlaufende Schlitze in der Tragplatte vorgesehen, die sich ebenfalls über die gesamte Länge der Tragplatte in Förderrichtung erstrecken. Die Tragplatte weist seitlich an den Schlitzen sich zu den Schiebern hin erstreckende Stehbleche auf. An der Oberseite der Übertragungsplatte ist ein U-Profil angeordnet, dessen Schenkel sich zur Tragplatte hin erstrecken und die Stehbleche übergreifen. Der dabei zwischen den Schenkeln des U-Profils und den Stehblechen entstehende Spalt soll als Abdichtung gegen das Eindringen von Kühlgut in den Schlitz durch den Kühlrost dienen. Nachteilig an diesem bekannten Kühlrost ist, daß durch die sich über die gesamte Länge des Kühlrosts erstreckenden Schlitze an diesen Stellen kein Kühlgas durch den Kühlrost geblasen werden kann. Damit wird das über den Schlitzen bzw. der Übertragungsplatten befindliche Kühlgut nur unzureichend gekühlt. Ein unerwünscht ungleichmäßiges Kühlergebnis ist die Folge. Nachteilig ist ferner, daß die Übertragungsplatte sämtliche Temperaturzonen des Kühlrosts durchläuft und deshalb starken Wärmebeanspruchungen ausgesetzt ist, die zu einem ungleichmäßigen Verziehen der Übertragungsplatte führen können.

Ausgehend von der US-A-3,010,218 liegt der Erfindung die Aufgabe zugrunde, einen Kühlrost mit einem Fördersystem der eingangs genannten Art zu schaffen, bei der die Mischwirkung und die Abdichtung gegenüber durchfallendem Kühlgut verbessert sind, ohne dabei das Kühlergebnis zu verschlechtern.

Die erfindungsgemäße Lösung liegt in einem Kühler mit den Merkmalen des Anspruchs 1. Vorteilhafte Weiterbildungen ergeben sich aus den Unteransprüchen.

Demnach ist bei einem Rostkühler der eingangs genannten Art vorgesehen, daß die Tragplatte an den Öffnungen mit jeweils einem Kragen versehen ist, der zumindest in Förderrichtung vorne und hinten eine zwischen Übertrager und Kragen wirkende Dichtung aufweist.

Die Erfindung hat erkannt, daß durch einen Kragen mit einer Dichtung an den Öffnungen in der Tragplatte eine bessere Abdichtung der Öffnungen gegen das Durchfallen von Kühlgut dank der an dem Kragen angeordneten Dichtung erreicht werden kann und zugleich eine bessere Förderwirkung der Schieber erzielt wird. Letzteres wird dadurch erreicht, daß aufgrund der Höhe der Kragen die Schieber von der Tragplatte beabstandet sind, sie also weiter in das von dem Kühlgut gebildete Bett hineinragen. Zusätzlich haben die Kragen den Vorteil, daß sie die Übertrager vor dem Kontakt mit dem Kühlgut schützen. Damit brauchen die Übertrager bei ihrer Hin- und Herbewegung sich höchstens noch mit einem Teil ihrer Länge, der sich außerhalb des Kragens zu dem Schieber hin erstreckt, ihren Weg durch das Kühlgut zu bahnen. Dadurch wird der Verschleiß und die für den Antrieb erforderliche Leistung vermindert. Besonders zweckmäßig ist es, wenn die Hubbewegung in einer Richtung erfolgt, die um einen Elevationswinkel α aus der Ebene der Tragplatte geneigt ist. Damit bewegen sich die Schieber bei ihrer Hubbewegung nicht nur mit einer horizontalen, sondern auch mit einer vertikalen Richtungskomponente. Durch diese bezogen auf die Tragplatte geneigte Bewegung wird eine bessere Durchmischung des Kühlguts erreicht. Das liegt daran, daß das auf der Tragplatte befindliche Kühlgut sich nicht gleichförmig in der Förderrichtung bewegt, sondern sich Zonen unterschiedlicher Transportgeschwindigkeiten ausbilden, wobei sich in einem der Tragplatte nahen Bereich eine Ruhezone bildet. Dank der Neigung wird Material aus der unten befindlichen Ruhezone nach oben in die bewegte Zone transportiert und umgekehrt. Diese bessere Mischwirkung wird erreicht, ohne daß dies durch den Nachteil erhöhter Antriebsleistung erkauft werden müßte. Denn durch eine schräg nach oben gerichtete Hubbewegung wird das Kühlgut zumindest partiell, in dem Bereich vor dem Schieber, angehoben, wodurch sich der Reibungswiderstand des vor dem Schieber befindlichen Kühlguts vermindert.

Zweckmäßigerweise ist die Dichtung von einem Rand des Kragens und einer Deckplatte, die an dem Übertrager angeordnet und um einen Einstellwinkel β aus der Ebene der Tragplatte geneigt ist, der genauso groß ist wie der Elevationswinkel α. Die Deckplatte verhindert durch ihr Zusammenwirken mit dem Kragen wirkungsvoll das Eindringen von Kühlgut in den Kragen und damit den Durchfall von Kühlgut durch die Öffnung auf die Unterseite der Tragplatte. Durch die geneigte Anordnung der Deckplatte an dem Übertrager wird erreicht, daß sich die Deckplatte bei der Hubbewegung stets in ihrer eigenen Spur bewegt. Damit wird bewirkt, daß zum einen der durch das Verschieben der Deckplatte in dem Bett des Kühlguts hervorgerufene Widerstand minimiert ist, und zum anderen, daß die Platte einen konstanten Abstand zu dem Rand des Kragens aufweist, wodurch eine gute Abdichtung in jeder Phase der Hubbewegung gewährleistet ist.

Vorzugsweise ist dazu eine Spanneinrichtung an dem Übertrager zum Verspannen der Deckplatte mit dem Kragen vorgesehen. Damit wird die Sicherheit erhöht, daß die Deckplatte in der für ein sicheres Abdichten erforderlichen Position in Bezug auf den Kragen gehalten ist. Dies ist insbesondere dann von Bedeutung, wenn aufgrund unvermeidlicher Toleranzen oder aufgrund des Einflusses von Wärmedehnung, insbesondere des Übertragers oder des Kragens, sich ansonsten die Dichtverhältnisse zwischen Deckplatte und Kragen ändern würden. Aber auch dann, wenn die Tragplatte aufgrund der Temperaturunterschiede sich verformt und damit sich die Position des Kragens ändert, wird weiterhin eine gute Abdichtung erreicht.

Weiterhin ist es zum Verbessern der Abdichtung zwischen Deckplatte und Kragen zweckmäßig, wenn mit der Deckplatte zusammenwirkende Federdichtungen an dem Kragen angeordnet sind. Obgleich durch herkömmliche Dichtflächen in den meisten Fällen eine ausreichende Abdichtung erzielt werden kann, so kann es sich in einigen Fällen empfehlen, zusätzlich Federbleche zur Verbesserung der Dichtwirkung vorzusehen. Dies empfiehlt sich insbesondere zum Ausgleich von Abstandsänderungen zwischen der Deckplatte und dem Kragen, wenn keine Spanneinrichtung vorgesehen ist. Zwar ist es aus Verschleißgründen häufig günstig, wenn die Federbleche auswechselbar an dem Kragen angeordnet sind, jedoch können sie zur einfacheren Herstellung und Montage auch einstückig mit dem Kragen ausgeführt sein.

Alternativ kann auch vorgesehen sein, daß die Kragen um den Einstellwinkel β geneigt sind, der genauso groß ist wie der Elevationswinkel α, und daß jeweils einer der Übertrager längsbeweglich in einem der Kragen geführt ist. Damit wird eine besonders verschleißgünstige Ausführung des Schieberantriebs erreicht. Die Übertrager laufen bei der Hubbewegung vollständig in ihrer eigenen Spur und brauchen daher kein Kühlgut zu verdrängen. Ferner gibt es bei der Vorhubbewegung keine Räume, die von dem Übertrager freigegeben werden und sich nachfolgend mit Kühlgut füllen können, welches beim Rückhub wieder aufwendig verdrängt werden müßte. Damit kann ein besonders verschleißarmes und mit wenig Antriebsleistung auskommendes Fördersystem verwirklicht werden.

Zweckmäßigerweise ist an dem Kragen eine mit dem Übertrager zusammenwirkende Dichtpackung vorgesehen. Zwar ist das nicht unbedingt erforderlich, da sich die Übertrager bei ihrer Bewegung im Vorhub das Kühlgut von dem Rand des Kragens weg bewegen, so daß die Gefahr unerwünschten Eindringens von Kühlgut in dieser Phase minimiert ist, jedoch kann es bei der Rückhubbewegung aufgrund von an dem Übertrager haftenden Kühlgut sein, daß dabei eine geringe Menge an Kühlgut in den Kragen eingebracht würde. Dies kann durch eine Dichtpackung an dem Kragen wirkungsvoll verhindert werden.

Die Erfindung wird nachfolgend unter Bezugnahme auf die Zeichnung erläutert, in der vorteilhafte Ausführungsbeispiele dargestellt sind. Es zeigen:
- Fig. 1: eine Schnittansicht eines erfindungsgemäßen Kühlrosts mit einem Fördersystem gemäß einem ersten Ausführungsbeispiel der Erfindung;
- Fig. 2: eine Schnittansicht gemäß der Linie A-A aus Fig. 1
- Fig. 3: eine Schnittansicht eines zweiten Ausführungsbeispiels der Erfindung;
- Fig. 4: eine Schnittansicht gemäß der Linie B-B aus Fig. 3
- Fig. 5: eine Schnittansicht eines dritten Ausführungsbeispiels der Erfindung;
- Fig. 6: eine Schnittansicht gemäß der Linie C-C aus Fig. 5; und

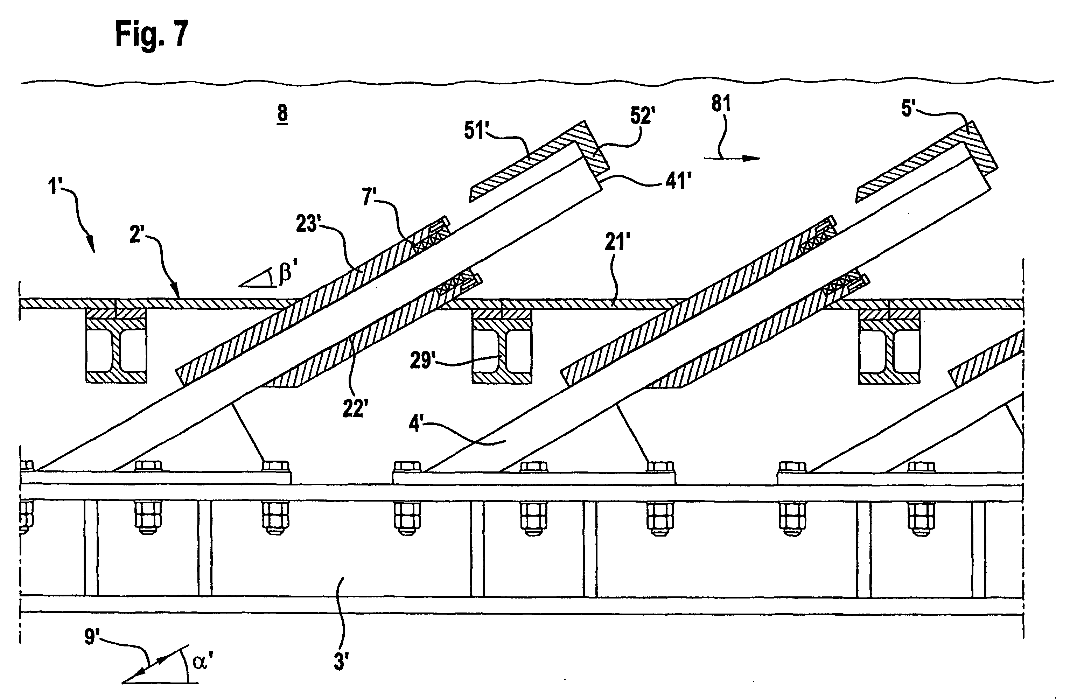

- Fig. 7: eine Schnittansicht eines vierten Ausführungsbeispiels der Erfindung.

Bei allen nachfolgenden Ausführungsbeispielen sei der Einfachheit halber angenommen, daß es sich um einen Kühlrost für einen Kühler handelt, der von unten nach oben von Kühlgas durchströmt wird und dabei zum Abkühlen von heißem Gut, insbesondere Zementklinker oder anderem partikelförmigen Schüttgut, dient.

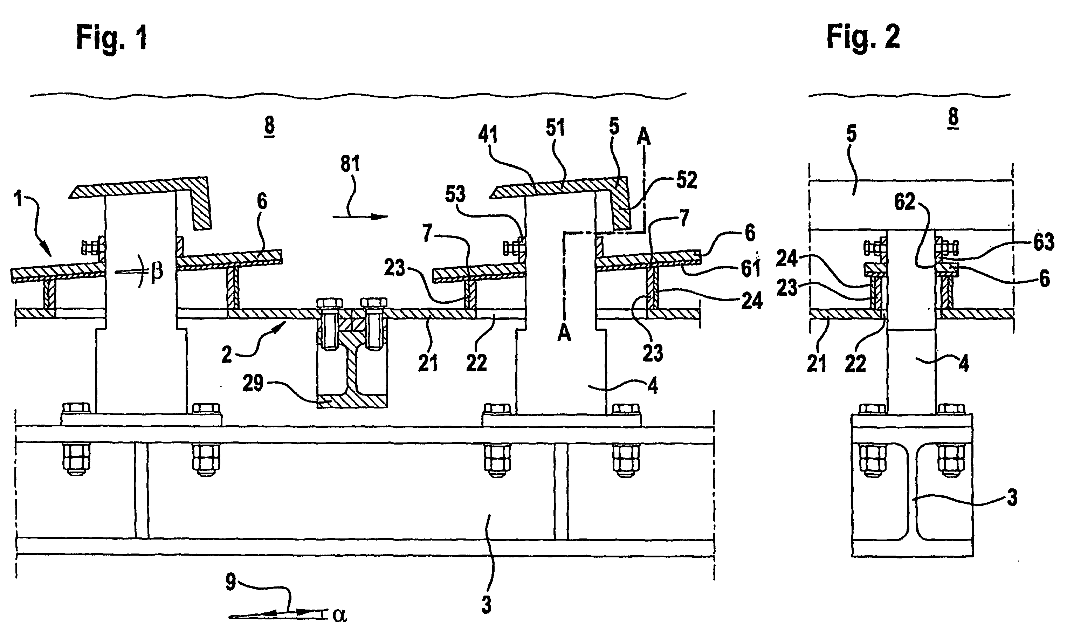

In Fig. 1 und 2 sind Schnittansichten durch einen Teil eines erfindungsgemäßen Kühlrosts, der in seiner Gesamtheit mit dem Bezugszeichen 1 bezeichnet ist, dargestellt. Er umfaßt eine Tragplatte 2, die auf einer Mehrzahl von Querträgern 29 befestigt ist. Die Tragplatte 2 ist aus einer Mehrzahl von Plattenelementen 21 zusammengesetzt, die jeweils mit ihren gegenüberliegenden Enden auf den Querträgern 29 befestigt sind. Unterhalb der Tragplatte 2 ist ein Antriebsrahmen 3 angeordnet. Oberhalb der Tragplatte 2 liegt Kühlgut 8 auf der Tragplatte 2 auf. Oberhalb der Tragplatte 2 und umgeben von dem Kühlgut 8 sind Schieber 5 angeordnet. Die Anordnung der Schieber 5 und ihre Verbindung mit dem Antriebsrahmen 3 wird nachfolgend detaillierter beschrieben werden.

Die Schieber 5 weisen eine etwa L-förmige Gestalt mit einem längeren Schenkel 51 und einem kürzeren Schenkel 52 auf. Der kürzere Schenkel 52 weist eine größere Dicke als der längere Schenkel 51 auf, da seine nach außen weisende Fläche bei einer Bewegung des Schiebers 5 in der Richtung der Ebene seines längeren Schenkels 51 die auf das Kühlgut 8 wirkende Schiebefläche ist und daher erhöhten Belastungen standhalten muß.

Die Plattenelemente 21 weisen Öffnungen 22 auf, an deren Rand ein nach oben in das Bett des Kühlguts 8 weisender Kragen 23 angeordnet ist. Der Kragen 23 umschließt die Öffnungen 22 vollständig. Die in Förderrichtung 81 vorne liegende Wand des Kragens 23 ist dabei höher als die in Förderrichtung hinten liegende Wand. Der Kragen ist an seiner dem Kühlgut 8 zugewandten Seite mit einer Plattierung 24 aus hochfestem und verschleißminderndem Material versehen.

Der Antriebsrahmen 3 unter der Tragplatte 2 ist beweglich gelagert und mit einem Antrieb (nicht dargestellt) verbunden.

Von diesem wird der Antriebsrahmen 3 in eine hin- und hergehende Hubbewegung, wie sie durch den Pfeil 9 symbolisch dargestellt ist, versetzt. Die Richtung der Hubbewegung ist um den Elevationswinkel α aus der Ebene der Tragplatte 2 geneigt. An einer Oberseite des Antriebsrahmens 3 sind eine Mehrzahl von Schubblechen 4 befestigt, die sich vertikal nach oben erstrecken. Jedes der Schubbleche 4 erstreckt sich durch eine der Öffnungen 22 in der Tragplatte 2 hindurch auf die mit Kühlgut 8 beaufschlagte Seite der Tragplatte 2. An dem oberen Ende des Schubblechs 4 ist einer der Schieber 5 angeordnet. Dazu weist das Schubblech 4 an seinem oberen Ende eine Abschrägung 41 auf, so daß die von der Abschrägung 41 gebildete Ebene parallel zu der Ebene der Hubbewegung 9 liegt. Auf dieser Abschrägung 41 liegt der Schieber 5 mit der Innenseite seines längeren Schenkels 51 auf, und zwar so, daß der kürzere Schenkel 52 des Schiebers 5 in Förderrichtung 81 gesehen vor dem längeren Schenkel 51 angeordnet ist und sich nach unten zur Tragplatte 2 hin erstreckt.

Etwas oberhalb der halben Höhe des Schubblechs 4 ist eine Deckplatte 6 an dem Schubblech 4 befestigt. Die Deckplatte 6 ist dabei mit einem Einstellwinkel β gegenüber der horizontalen Ebene der Tragplatte 2 an dem Schubblech 4 angeordnet, so daß sie parallel zu der oberen Schräge 41 des Schubblechs 4 und damit auch parallel zu der Richtung der Hubbewegung 9 liegt. Die Deckplatte 6 ist so bemessen, daß sie auf dem Kragen 23 aufliegt, wobei sie vorne über die Vorderwand des Kragens 23 und hinten über die hintere Wand des Kragens 23 mindestens soweit hervorragt, daß sie in jeder Phase der Hubbewegung auf den Wänden des Kragens 23 aufliegt. Die Deckplatte 6 weist an ihrer Unterseite eine Plattierung 61 auf, die aus verschleißgünstigem und hochfestem Material besteht. Durch das Aufliegen der Deckplatte 6 auf dem Kragen 23 wird von dem oberen Rand des Kragens 23 und der Plattierung 24 eine Dichtfläche gebildet, die mit einer Gegendichtfläche, die von der Plattierung 61 der Deckplatte 6 gebildet ist, zusammenwirkt und so eine Dichtung 7 bildet.

Die Deckplatte 6 selbst weist in ihrer Mitte eine Öffnung 62 auf, deren Weite entsprechend dem Querschnitt des Schubblechs 4 gewählt ist. An dem Rand der Öffnung 62 ist eine Halterung 63 angeordnet, mittels derer die Deckplatte 6 an dem Schubblech 4 befestigt ist.

Im Betrieb wird der Antriebsrahmen 3 mittels des Antriebs (nicht dargestellt) in eine Hubbewegung versetzt, deren Richtung 9 um den Elevationswinkel α gegenüber der Horizontalen geneigt ist. Damit bewegen sich auch die Schubbleche 4, die Schieber 5 sowie die Deckplatten 6 entlang dieser Richtung. Die Schieber 5 schieben mit ihrem kürzeren Schenkel 52 einen Teil des Kühlguts 8 vor sich her und bewirken somit eine Bewegung des Kühlguts 8 in die Förderrichtung 81. Zusätzlich geben sie zumindest dem Bereich des Kühlguts, der von dem Schenkel 52 bei seiner Vorhubbewegung verdrängt wird, eine vertikale Richtungskomponente. Diese bewirkt einerseits eine gewisse Durchmischung des Kühlguts 8 und bewirkt andererseits eine leichtere Verschieblichkeit des von dem Schieber 5 verdrängten Kühlguts 8, da durch die leicht nach oben gerichtete Bewegung das jeweils verdrängte Kühlgut etwas von dem unterliegenden Kühlgut 8 abgehoben wird und damit die der Verschiebung entgegengerichteten Reibungskräfte vermindert werden.

Die Deckplatte 6 bewegt sich bei der Hubbewegung aufgrund ihrer Neigung um den Einstellwinkel β in ihrer eigenen Spur, d. h. in ihrer eigene Plattenebene, da sie um denselben Winkel geneigt an dem Übertrager angeordnet ist, den auch die Hubrichtung 9 als Elevationswinkel α gegenüber der Ebene der Tragplatte 2 aufweist. Die Deckplatte 2 braucht sich daher lediglich mit ihrer in Bewegungsrichtung vorne liegenden Seite, d. h. bei dem Vorhub mit der Vorderseite und bei dem Rückhub mit der Rückseite, einen Weg durch das Kühlgut zu bahnen. Sie läßt sich daher relativ leicht verschieben und unterliegt, was bedeutend wichtiger ist, nur einem geringen Verschleiß. Der geringe Verschleiß ist von besonderer Bedeutung im Hinblick auf die Unterseite der Deckplatte 6 mit der dort angeordneten Plattierung 61, die als Gegendichtfläche der Dichtung 7 wirkt.

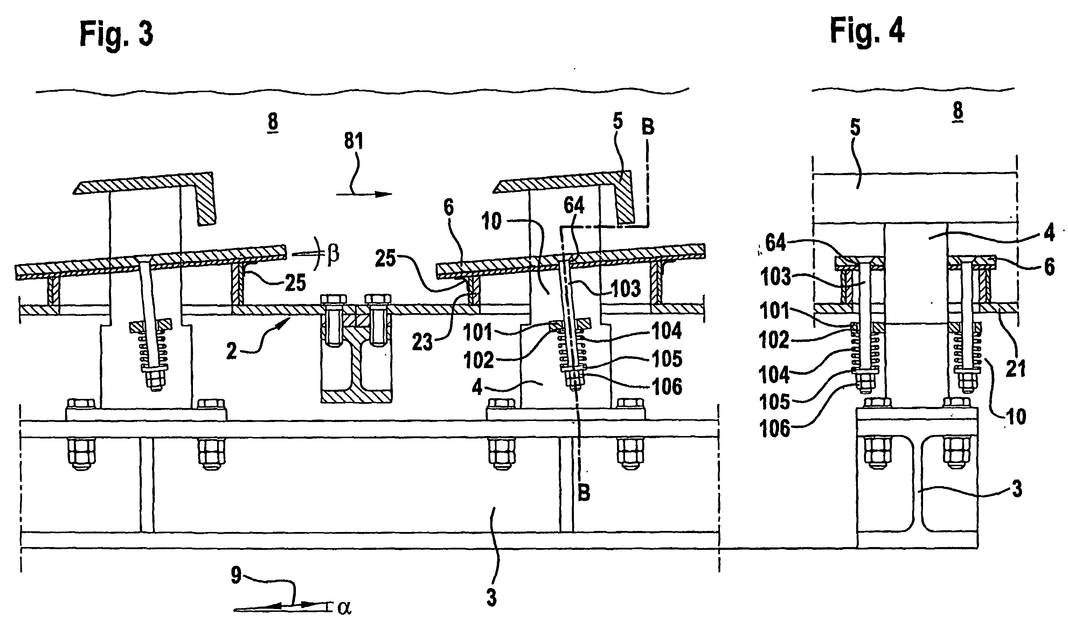

Das in Fig. 3 und 4 dargestellte Ausführungsbeispiel entspricht im wesentlichen dem in Fig. 1 und 2 dargestellten Ausführungsbeispiel. Gleiche Teile sind daher mit denselben Bezugszeichen versehen und von einer detaillierten Erläuterung wird abgesehen. Bei diesem Ausführungsbeispiel ist an dem Schubblech 4 eine Spanneinrichtung 10 angeordnet. Die Spanneinrichtung weist eine Halteplatte 101 auf, die in Förderrichtung 81 gesehen seitlich angeordnet ist. Die Halteplatte 101 weist eine Öffnung 102 auf, durch die ein Schraubenbolzen 103 geführt ist. Ferner ist an der Halteplatte 101 eine Feder 104 angeordnet, die sich von der Halteplatte nach unten erstreckt. Nach unten ist die Feder 104 abgestützt durch einen Teller 105 und eine Spannmutter 106 an dem unteren Ende des Schraubenbolzens 103. Das Gegenlager für die Feder 104 wird durch die Unterseite der Halteplatte 101 gebildet. Der Schraubenbolzen 103 erstreckt sich durch den Innenraum der Feder 104, die Öffnung 102 in der Halteplatte 101 und darüber hinaus weiter nach oben durch ein Schraubenloch 64 in der Deckplatte 6 durch. Das Schraubenloch 64 weist eine Senkung auf, die zur Aufnahme eines Kopfes des Schraubenbolzens 103 ausgeformt ist.

Die Spanneinrichtung wird wie folgt betätigt: Bei auf dem Kragen 23 aufliegender Deckplatte 6 wird der durch die Deckplatte 6 und die Halteplatte 101 sowie die Feder 104 gesteckte Schraubenbolzen 103 durch Verdrehen der Spannmutter 106, die den Teller 105 in Richtung zu der Halteplatte 101 bewegt, gespannt. Um eine symmetrische Auflage der Deckplatte 6 auf dem Kragen 23 zu erreichen, ist eine entsprechende Spanneinrichtung an der gegenüberliegenden Seite des Schubblechs 4 angeordnet; sie wird in gleicher Weise gespannt. Die Deckplatte 6 wird durch die Kraft der Feder 104 gegen den Kragen 23 gezogen; gleichwohl ist sie nicht starr, sondern kann sich unter Überwindung der Kraft der Feder 104 bewegen. Auf diese Weise können Ungenauigkeiten hinsichtlich des Elevationswinkels α der Hubbewegung und des Einstellwinkels β, mit dem die Deckplatte 6 an dem Schubblech 4 befestigt ist, ausgeglichen werden. Solche toleranzbedingten Abweichungen können insbesondere durch Eindringen von Verunreinigungen wie Staub des Kühlguts in dem Bereich der Dichtung 7 auftreten, wie auch durch unterschiedliche Wärmedehnung des Schubblechs 4 und des Kragens 23.

Zur Verbesserung der Dichtung 7 zwischen dem Kragen 23 und der Deckplatte 6 sind an dem oberen Bereich des Kragens 23 Federbleche 25 angeordnet, die dichtend an der Plattierung 61 der Deckplatte 6 anliegen. Damit wird die Dichtung 7 vor dem Zutritt von Kühlgut 8 geschützt, so daß die Dichtung 7 weniger verschleißt und somit wirksamer abdichtet.

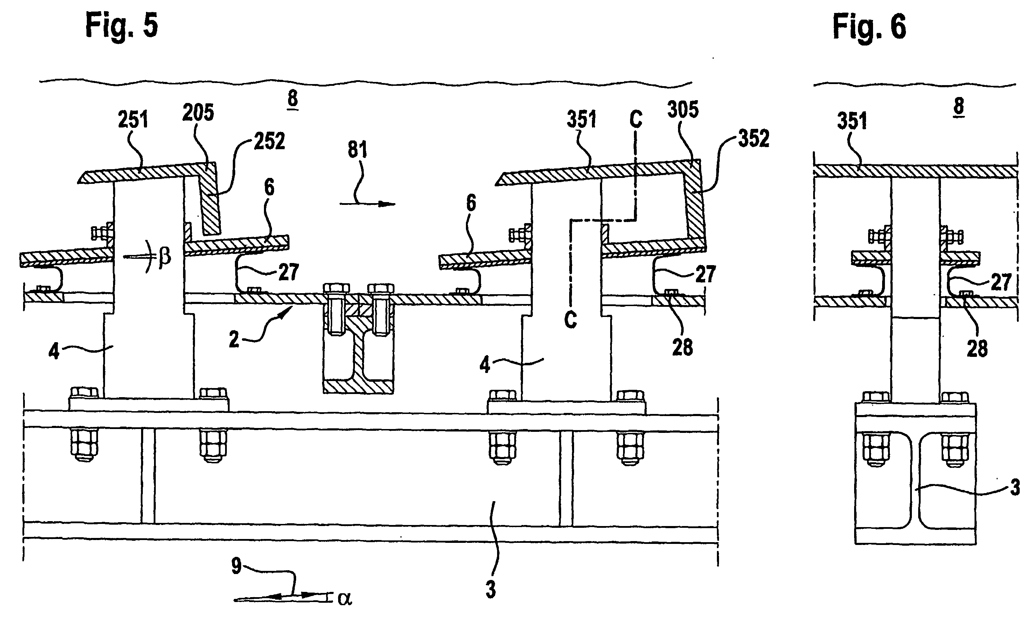

In Fig. 5 und 6 ist ein drittes Ausführungsbeispiel der Erfindung dargestellt. Es entspricht im wesentlichen dem ersten und zweiten Ausführungsbeispiel. Gleiche Elemente weisen dieselben Bezugszeichen auf; von einer näheren Erläuterung ihres Aufbaus und ihrer Funktion wird nachfolgend daher abgesehen. Das dritte Ausführungsbeispiel unterscheidet sich von dem ersten und zweiten Ausführungsbeispiel hauptsächlich dadurch, daß der Kragen 23 und die Federbleche 25 einstückig als ein Federkragen 27 ausgeführt sind. Dadurch vereinfacht sich die Herstellung der Anordnung, da eine geringere Anzahl an Teilen erforderlich ist. Da die Federbleche regelmäßig einem gewissen Verschleiß unterliegen, ist es zweckmäßig, die einstückige Ausführung auswechselbar an der Tragplatte 2 mittels Schrauben 28 zu befestigen.

Gleichfalls in Fig. 5 und 6 dargestellt sind alternative Ausführungsarten für die Schieber 5. Bei dem in Fig. 5 auf der linken Seite dargestellten Schieber 205 ist der nach unten zur Tragplatte 6 weisende kurze Schenkel 252 gegenüber der Ausführung gemäß dem ersten Ausführungsbeispiel verlängert, und zwar soweit, daß er bis zur Deckplatte 6 reicht. In dem dargestellten Beispiel verbleibt ein kleiner Spalt zwischen dem unteren Ende des kürzeren Schenkels 252 und der Oberseite der Deckplatte 6. Damit besteht ausreichend Raum für Temperaturdehnungen des Schiebers, insbesondere des kürzeren Schenkels 252.

Bei dem in Fig. 5 auf der rechten Seite dargestellten Schieber 305 sind beide Schenkel, der längere 351 sowie der kürzere Schenkel 352, länger als bei dem Schieber 5 gemäß dem ersten Ausführungsbeispiel. Der kürzere Schenkel 352 reicht, wie auch der Schenkel 252 des Schiebers 205, bis auf die Deckplatte 6 hinab. Im Unterschied zu dem Schieber 205 ist jedoch das untere Ende des kurzen Schenkels 352 bündig mit dem in Förderrichtung vorne liegenden Rand der Deckplatte 6 ausgerichtet und dort an diesem befestigt. Damit entsteht zwischen dem Schieber 305 und der Deckplatte 6 ein Raum, der lediglich zu der in Förderrichtung hinten gelegenen Seite offen ist. Bei dem Vorhub des Schiebers 305 kann kein Kühlgut 8 mehr aus dem Bereich vor dem kürzeren Schenkel 352 in den Bereich dahinter gelangen. Es entsteht somit bei dem Vorhub ein freier Raum zwischen dem Schieber 305 und der Deckplatte 6, der nicht mit Kühlgut 8 angefüllt ist. Das hat den Vorteil, daß Schieber 305 mit seinem Schenkel 352 beim Rückhub kein Kühlgut 8 mehr wegzuschieben braucht.

Ein viertes Ausführungsbeispiel der Erfindung ist in Fig. 4 dargestellt. Der Kühlrost 1' umfaßt eine Tragplatte 2' sowie ein Fördersystem mit einem Antriebsrahmen 3', Schubstangen 4' als Übertrager und Schieber 5'.

Die Tragplatte 2' ist gebildet aus mehreren Plattenelementen 21'. Sie sind auf einer Mehrzahl von I-förmigen Querträgern 29' befestigt. Die Plattenelemente 21' weisen etwa mittig jeweils eine schräg von unten nach oben verlaufende Öffnung 22' auf, die von einer gleichfalls schräg verlaufenden Buchse 23' als Kragen begrenzt ist. In den Öffnungen 22' der Buchsen 23' sind die Schubstangen 4' gelagert. Die Schubstangen 4' sind in ihren Abmessungen derart auf die Weite der Öffnungen 22' abgestimmt, daß die Schubstangen 4' von den Buchsen 23' geführt sind. An ihrem unteren Ende sind die Schubstangen 4' mit dem Antriebsrahmen 3' verbunden. Der Antriebsrahmen ist mit einem Antrieb (nicht dargestellt) verbunden, durch den er in eine Hubbewegung versetzt wird, wie sie durch den Pfeil 9' symbolisch dargestellt ist. Die Richtung 9' ist um den Elevationswinkel α' gegenüber der horizontalen Ebene der Tragplatte 2' geneigt. Man erkennt, daß die Schubstangen 4' und ebenso die Buchsen 23' um einen Einstellwinkel β' gegenüber der Horizontalen geneigt sind, wobei der Einstellwinkel β' gleich dem Elevationswinkel α' ist. Auf diese Weise laufen die Schubstangen 4' bei der Hubbewegung entlang ihrer eigenen Spur.

An dem nach oben weisenden Rand der Buchsen 23' sind Dichtpackungen 7' angeordnet, die dichtend zwischen der Buchse 23' und der Schubstange 4' wirken. An dem oberen Ende der Schubstangen 4' ist jeweils ein L-förmiger Schieber 5' angeordnet. Der Schieber weist einen längeren Schenkel 51' auf, der parallel und beabstandet von einer Längsseite der Schubstange 4' angeordnet ist. Der Schieber 5' ist mit seinem kürzeren Schenkel 52' an einer Stirnseite 41' der Schubstange 4' befestigt.

Anstelle des Antriebsrahmens 3' als gemeinsamer Antrieb für die Schieber 5' können auch unabhängige Einzelantriebe vorgesehen sein. Dies ist zwar aufwendiger, bietet jedoch Vorteile hinsichtlich einer unabhängig voneinander gesteuerten Bewegung der Schieber 5'. Bei einer bewährten Ausführung sind Hydraulikzylinder als Antrieb vorgesehen, deren Kolbenstange zugleich die Schubstange 4' ist.

Im Betrieb bewegt sich der Antriebsrahmen in Richtung des Pfeils 9'. Diese Bewegung wird über die Schubstangen 4' auf die Schieber 5' übertragen, die somit eine Hubbewegung ausführen. Wie auch schon bei den Ausführungsbeispielen 1 bis 3 ist durch die Dichtpackung 7' zwischen der als Kragen wirkenden Buchse 23' und der als Übertrager wirkenden Schubstange 4' sichergestellt, daß kein Kühlgut 8 in den Raum der Öffnung 22' eindringt und damit in den Raum unterhalb der Tragplatte 2' durchfällt. Dadurch, daß die Buchse 23' um denselben Einstellwinkel β' geneigt ist wie die Hubbewegung als Elevationswinkel α' gegenüber der Horizontalen geneigt ist, wird erreicht, daß der von der Dichtpackung 7' abzudichtende Abstand zwischen der Buchse 23' und der Schubstange 4' über die gesamte Hubbewegung hinweg konstant bleibt.

## Patentansprüche

1. Kühlrost für Schüttgut mit einer Tragplatte (2) zur Aufnahme einer Schicht (8) des Kühlguts und Förderorganen zum Transport des Kühlguts (8) in einer Förderrichtung (81) auf der ruhenden Tragplatte (2), die auf der mit Kühlgut (8) beaufschlagten Seite der Tragplatte (2) beweglich angeordnete Schieber (5) und einen auf der anderen Seite der Tragplatte (2) angeordneten Antrieb (3) zum Ausführen einer hin- und hergehenden Hubbewegung (9) umfassen, wobei jedem Schieber (5) eine Öffnung (22) in der Tragplatte (2) und ein **dadurch** geführter Übertrager (4) zugeordnet ist, der den Schieber (5) mit dem Antrieb (3) verbindet, **dadurch gekennzeichnet, daß** die Tragplatte (2) an den Öffnungen (22) mit jeweils einem rund um die Öffnung (22) umlaufenden Kragen (23) versehen ist, der zumindest in Förderrichtung (81) vorne und hinten eine zwischen Übertrager (4) und Kragen (23) wirkende Dichtung (7) aufweist.

2. Kühlrost nach Anspruch 1, **dadurch gekennzeichnet, daß** die Hubbewegung (9) in einer Richtung erfolgt, die um einen Elevationswinkel α aus der Ebene der Tragplatte (2) geneigt ist.

3. Kühlrost nach Anspruch 1 oder 2, **dadurch gekennzeichnet, daß** die Dichtung (7) von einem Rand des Kragens (23) und einer Deckplatte (6) gebildet ist, die an dem Übertrager (4) angeordnet und um einen Einstellwinkel β aus der Ebene der Tragplatte (2) geneigt ist, der genauso groß ist wie der Elevationswinkel α.

4. Kühlrost nach Anspruch 3, **dadurch gekennzeichnet, daß** an dem Übertrager (4) eine Spanneinrichtung (10) zum Verspannen der Deckplatte (6) mit den Kragen (23) vorgesehen ist.

5. Kühlrost nach einem der Ansprüche 3 bis 4, **dadurch gekennzeichnet, daß** mit der Deckplatte (6) zusammenwirkende Federdichtungen (27) an dem Kragen (23) angeordnet sind.

6. Kühlrost nach Anspruch 2, **dadurch gekennzeichnet, daß** die Kragen (23') um den Einstellwinkel β geneigt sind, der genauso groß ist wie der Elevationswinkel α, und daß jeweils einer der Übertrager (4') längsbeweglich in einem der Kragen (23') geführt ist.

7. Kühlrost nach Anspruch 6, **dadurch gekennzeichnet, daß** an dem Kragen (23') eine mit dem Übertrager zusammenwirkende Dichtpackung (7') vorgesehen ist.

## Claims

1. A cooling grate for bulk material, having a carrying plate (2) for accommodating a layer (8) of the material for cooling, and having conveying elements by means of which the material for cooling (8) is transported in a conveying direction (81) on the resting carrying plate (2) and which comprise pushers (5), which are arranged in a movable manner on that side of the carrying plate (2) which is subjected to the action of material for cooling (8), and a drive (3), which is arranged on the other side of the carrying plate (2) and is intended for executing a reciprocating lifting movement (9), each pusher (5) being assigned an opening (22) in the carrying plate (2) and a transmission member (4), which is guided thereby and connects the pusher (5) to the drive (3), **characterized in that** the carrying plate (2) is provided, at the openings (22), with in each case one collar (23) running around the opening (22), which at least at the front and rear, as seen in the conveying direction (81), has a seal (7) acting between the transmission member (4) and collar (23).

2. The cooling grate as claimed in claim 1, **characterized in that** the lifting movement (9) takes place in a direction which is inclined by an angle of elevation α out of the plane of the carrying plate (2).

3. The cooling grate as claimed in claim 1 or 2, **characterized in that** the seal (7) is formed by a border of the collar (23) and a cover plate (6), which is arranged on the transmission member (4) and is inclined out of the plane of the carrying plate (2) by a setting angle β which is equal to the angle of elevation α.

4. The cooling grate as claimed in claim 3, **characterized in that** a clamping device (10) is provided on the transmission member (4) in order to brace the cover plate (6) with the collar (23).

5. The cooling grate as claimed in either of claims 3 and 4, **characterized in that** resilient seals (27) which interact with the cover plate (6) are arranged on the collar (23).

6. The cooling grate as claimed in claim 2, **characterized in that** the collars (23') are inclined by the setting angle β, which is equal to the angle of elevation α, and **in that** in each case one of the transmission members (4') is guided in a longitudinally movable manner in one of the collars (23').

7. The cooling grate as claimed in claim 6, **characterized in that** a seal packing (7') which interacts with the transmission member is provided on the collar (23').

## Revendications

1. Grille de refroidissement pour produit en vrac comportant une plaque de support (2) pour recevoir une couche (8) du produit à refroidir et des organes de convoyage pour le transport du produit à refroidir (8) dans un sens de convoyage (41) sur la plaque de support (2) au repos, qui comprennent des pousseurs (5), disposés déplaçables sur la face de la plaque de support (2) recevant le produit à refroidir (8), ainsi qu'un dispositif d'entraînement (3), disposé sur l'autre face de la plaque de support (2), pour exécuter un mouvement alternatif (9) dans un sens et dans l'autre, à chaque pousseur étant associés une ouverture (22) pratiquée dans la plaque de support (2) et un translateur (4) guidé à travers celle-ci, qui relie le pousseur (5) au dispositif d'entraînement (3), **caractérisée en ce que** la plaque portante (2) est pourvue au droit de chacune des ouvertures (22) d'une collerette (23) entourant toute l'ouverture (22), laquelle comporte au moins à l'avant et à l'arrière, dans le sens de convoyage (81), une garniture d'étanchéité (7) agissant entre le translateur (4) et la collerette (23).

2. Grille de refroidissement selon la revendication 1, **caractérisée en ce que** le mouvement alternatif (9) s'effectue dans une direction qui est inclinée d'un angle d'élévation α par rapport au plan de la plaque de support (2).

3. Grille de refroidissement selon la revendication 1 ou 2, **caractérisée en ce que** la garniture d'étanchéité (7) est formée par un bord de la collerette (23) et une plaque de couverture (6) qui est disposée sur le translateur (4) et est inclinée d'un angle de réglage β par rapport au plan de la plaque de support (2), lequel angle est exactement égal à l'angle d'élévation α.

4. Grille de refroidissement selon la revendication 3, **caractérisée en ce que** sur le translateur (4) est prévu un dispositif de serrage (10) pour serrer la plaque de couverture (6) avec la collerette (23).

5. Grille de refroidissement selon l'une des revendications 3 ou 4, **caractérisée en ce que** des garnitures d'étanchéité élastiques (27), coopérant avec la plaque de couverture (6), sont disposées sur la collerette (23).

6. Grille de refroidissement selon la revendication 2, **caractérisée en ce que** les collerettes (23') sont inclinées de l'angle de réglage β qui est exactement égal à l'angle d'élévation α, et **en ce que** l'un des translateurs (4') est guidé déplaçable longitudinalement dans l'une des collerettes (23').

7. Grille de refroidissement selon la revendication 6, **caractérisée en ce que** sur la collerette (23') est prévue une garniture d'étanchéité (7') coopérant avec le translateur.
